# EUROPÄISCHE PATENTSCHRIFT

(11) **EP 2 035 715 B1**
(45) Veröffentlichungstag und Bekanntmachung des Hinweises auf die Patenterteilung: **21.09.2011**
(21) Anmeldenummer: 07785866.0
(22) Anmeldetag: 28.06.2007
(51) Int. Cl.: F16B 33/00, B29C 70/86, B29D 1/00

(54) **VERSTÄRKTES KRAFTÜBERTRAGUNGSTEIL**
REINFORCED FORCE TRANSMISSION PART
PIÈCE DE TRANSMISSION DE FORCE RENFORCÉE

(30) Priorität: 01.07.2006 DE 102006030894
(43) Veröffentlichungstag der Anmeldung: 18.03.2009
(73) Patentinhaber: FIREP Rebar Technology GmbH, 40549 Düsseldorf (DE)
(72) Erfinder: TSUKAMOTO, Kenichi, 40467 Meerbusch (DE)
(74) Vertreter: Schrooten, Rolf
(86) Internationale Anmeldenummer: PCT/EP2007/005731
(87) Internationale Veröffentlichungsnummer: WO 2008/003426

(56) Entgegenhaltungen:
- WO-A-93/08976
- DE-A1- 3 640 208
- JP-A- 1 210 332

## Beschreibung

Die vorliegende Erfindung betrifft ein Kraftübertragungsteil mit einem Körper aus einem Faserverbundwerkstoff nach dem Oberbegriff von Anspruch 1. Solche Kraftübertragungstelle haben mindestens ein Innen- oder Außengewinde, um darüber eine in einer axialen Richtung wirkende Kraft übertragen zu können. Sie sind vermittels des einen oder mittels mehrerer Gewinde formschlüssig festlegbar und können als temporäres oder permanentes Montage- und/oder Befestigungsteil beispielsweise als Mutter, Kupplung, Schäkel, Adapter, Spannschloss, Installationswerkzeug, Bolzen oder dergleichen ausgeführt und auch selbst Teil eines Werkstückes sein.

Derartige Kraftübertragungsteile können insbesondere im Zusammenhang mit Ankerungen beispielsweise im Bergbau oder Tunnelbau oder mit Bewehrungen in Bauelementen eingesetzt werden. Üblicherweise werden sie dabei auf korrosionsgeschützte oder aus Faserverbundmaterial hergestellte Stäbe oder auf andere stabähnlichen Bauteile festgelegt bzw. aufgeschraubt.

Der Rohling eines Kraftübertragungsteils wird durch Wickeln von Endlosfasem quer zur Schraub-/Längsachse hergestellt, danach außen weiter mit Harz benetzt/getränkt und zum Sechskant geformt und danach wird das Kunststoff-Innengewinde nachgeformt.

Auch für solche aus faserverstärktem Werkstoff (FVW) hergestellte Kraftübertragungsteile ergeben sich jedoch erhebliche Nachteile im Vergleich zu Stahllösungen. So reagiert der Mutternkörper unter Last nachgiebiger, weshalb insbesondere in der Kombination Mutter mit einem Kunststoffaußengewinde auf einem profilierten Faserverbundstab die kurzfristig erreichbaren Kräfte bei axialem Zug und daraus resultierender Druckeinleitung in die Stirnfläche der Mutter relativ gering sind. Dabei will die Mutter sich senkrecht zur Schraubachse radial weiten und über die Gewindegänge gleiten bzw. springen.

Aber auch die langfristigen Haltekräfte führen durch Kriechen der Werkstoffpaarungen infolge einer elasto-plastischen Verformung zu weiterem Tragkraftverlust. Dabei wird der Mutternkörper radial elastisch und letztlich auch plastisch geweitet, so dass der Gewindedurchmesser in der Mutter größer wird, bis diese schlupft und dann über die Gewindegänge springt.

Unter hoher Belastung kann das Bolzengewinde dabei aber auch stark beschädigt oder gar zerstört werden. Das max. erreichbare Lastniveau der Kunststoffmutter liegt längenabhängig von der Anzahl der Gewindegänge bei 25-30%, das einer Vollstahlmutter auf dem Faserstab bei 45 - 65% der theoretischen Bruchlast des Faserstabes.

Bei konventionellen Schraubverbindungen aus Stahl und homogenen Stahlmuttern mit ausgeprägter Steifigkeit und ausgeprägtem Fließen oberhalb der Streckgrenze des Materials wird die Mutter üblicherweise so dimensioniert, dass sie in jedem Fall das Stahlgewinde eines Ankers zerstört oder den Anker/Stab (im Gewinde) abreißt. Dazu wird konstruktiv die Mindeststrecklast der Mutter oberhalb der Mindestbruchlast des Bolzens dimensioniert.

Da diese beiden Lastbereiche (Mindeststrecklast und Mindestbruchlast) beim Stahlstab nur etwa 50% bis 75% der Bruchlast des faserverstärkten Kunststoffstabes erreichen, würde für die Kunststoffverbindung das Erreichen des konventionellen Stahllastniveaus ausreichen. Es wäre aber in gewissen Anwendungsfällen wünschenswert, dass die Kopflast (Nutzlast und Versagenslast der Mutter) im Bereich der Bruchlast des Faserstabes liegt.

Aus der DE 35 18 089 A1 ist ein Kraftübertragungsteil mit einem Körper aus einem anisotropen Faserverbundwerkstoff bekannt, wobei das Kraftübertragungsteil mindestens ein Gewinde aufweist, durch das eine axiale Kraft übertragbar ist. Dabei wird ein in das Faserverbundmaterial eingebrachtes Gewinde von einem in Stahl eingebrachtem Gewinde fortgesetzt. Diese Bauform ist jedoch relativ aufwendig und sie hat in axialer Richtung einen vergrößerten Bauraumbedarf, was insbesondere im Bergbau oder Tunnelbau einen entscheidenden Nachteil bedeutet.

Aus der DE 36 40 208 A1 ist gemäß dem Oberbegriff des Anspruchs 1 ein Kraftübertragungsteil in Form einer Gewindemutter aus Faserverbundwerkstoff bekannt, die einen Körper aus einem anisotropen Faserverbundwerkstoff sowie ein kraftschlüssig damit verbundenes Verstärkungselement aus einem anisotropen Kunststoff umfasst. In das Verstärkungselement ist ein Gewinde eingebracht, durch das eine axiale Kraft übertragen werden kann. Das Verstärkungselement ist dabei von dem Körper aus Faserverbundwerkstoff umschlossen.

Aus der EP 1 447 205 A2 ist ein Kraftübertragungsteil der eingangs genannten Art bekannt. Hierbei ist bei einer als hybrides Bauteil ausgeführten Krafteinleitungsvorrichtung ein Einsatz aus Metall von einer Struktur aus faserverstärktem Kunststoff umschlossen. In dem als Verstärkungselement aus isotropen Material dienenden Metalleinsatz ist zur Kraftübertragung ein Gewinde vorgesehen, welches zur Aufnahme von Metallschrauben dient, wie es auch prinzipiell vorher schon in der Dissertation von Frank Trinter ("Zur Festigkeit von Schraubenverbindungen an Bauteilen aus SMC" Universität-Gesamthochschule Kassel 1991 / F&E-Vorhaben AiF12485N) beschrieben wird. Ein Metalleinsatz ist mit einem relativ hohen Gewicht sowie mit der Gefahr von Korrosion verbunden. Die in der EP 1 447 205 A2 offenbarten Kraftübertragungsteile dienen zur Verbindung von blechähnlichen, dünnschichtigen Flächenstrukturen, weshalb die Krafteinleitung vom Kraftübertragungsteil in seine konstruktive Umgebung im Wesentlichen radial und in der flächigen Ausdehnung der Hauptebene der zu verbindenden Sheets oder ähnlichen Bauteilen erfolgt.

Aufgabe der vorliegenden Erfindung ist es daher, ein verbessertes Kraftübertragungsteil der eingangs genannten Art aus einem Faserverbundwerkstoff zu schaffen, das bei einfacher Konstruktion besonders hohe Belastungen übertragen kann, wobei aber auch bei hohen und wechselnden Belastungen ein Festfressen der in Eingriff befindlichen Gewinde vermieden werden soll, so dass auch nach einer Entlastung die miteinander über das mindestens eine Gewinde verbundenen Teile noch leicht schraubbar sind. Auch soll das Kraftübertragungsteil insbesondere in axialer Richtung nur einen geringen Bauraum benötigen.

Diese Aufgabe wird erfindungsgemäß durch ein Kraftübertragungsteil nach Anspruch 1 gelöst. Vorteilhafte Ausgestaltungen und Weiterbildungen der Erfindung ergeben sich aus den abhängigen Ansprüchen.

Wesentlich bei der erfindungsgemäßen Lösung ist es, dass das Verstärkungselement aus einem isotropen und/oder homogenen Kunststoff besteht, der mit dem Körper aus anisotropen Faserverbundwerkstoff verbunden ist, und dass das Verstärkungselement durch eine Hülse gebildet ist.

Der Hauptvorteil liegt dabei darin, dass quer zur Achse eine besonders hohe tangentiale Festigkeit und Beständigkeit des Kraftübertragungsteils erreicht wird. Durch die Anordnung eines zusätzlichen Verstärkungselements aus einem homogenen Kunststoff wird das Kraftübertragungsteil in einer Weise verstärkt, dass die Kontaktzone und Fläche des in das Verstärkungselement eingebrachten Gewindes des Kraftübertragungsteils einen mechanisch deutlich höheren Widerstand gegen Verformung und Zerstörung aufweist, und dass das Kraftübertragungsteil aus einem solchen Hybridmaterial bei geringem Gewicht verformungssteif und zugleich sowohl in mechanischer als auch in chemischer Hinsicht beständig ist und dauerhaltbar seine Gewindefunktion beibehält.

So wird ein korrosionsgeschütztes, mechanisch und chemisch beständiges Kraftübertragungsteil geschaffen, das als Schraubteil, insbesondere als Mutter oder Kupplung für Schraubpaarungen mit vorzugsweise ebenfalls korrosionsgeschützten oder aus Faserverbundmaterial hergestellten Gewindebolzen optimal zusammen wirken kann. Es umfasst mindestens zwei in ihrem mechanischen Verhalten unterschiedliche Werkstoffe, die hochfest miteinander verbunden sind. Insbesondere kann das hülsenförmige Verstärkungselement mit Vorsprüngen versehen werden, die eine formschlüssige Verbindung zwischen dem Körper aus Faserverbundwerkstoff und dem Verstärkungselement ermöglichen,

Die beiden Kunststoff-Werkstoffe sind bezüglich ihrer mechanischen Eigenschaften und Geometrien vorteilhafterweise so aufeinander abgestimmt und dimensioniert, dass bei zunehmender Belastung das vorzugsweise als Innenteil eingesetzte Verstärkungselement zunächst wesentlich steifer und bis nahe an ein fließartiges Verhalten heran reagiert und überwiegend allein belastet wird und das elastischere Faserverbundmaterial nur relativ geringfügig beansprucht wird. Kurz vor einer Grenzbelastung und plastischen Verformung des Verstärkungselements ermöglicht das weiter linear-elastisch reagierende Faserverbundmaterial eine verformungsbegrenzende Lastaufnahme. Es reagiert dann nur begrenzt elastisch und harmoniert mit dem weiteren Lastanstieg im Werkstoff des Verstärkungselements, indem dann der Werkstoff des Verstärkungselements zusammen mit dem Faserverbundwerkstoff im Spannungs-Dehnungsverhalten einen weiter annähernd linearen Verlauf aufweist.

Das erfindungsgemäße Kraftübertragungsteil wird somit aus mehreren verschiedenen Materialen oder Vorprodukten hergestellt, die ihrerseits schon teilweise oder vollständig vorfabriziert sein können, oder die erst während der Herstellung des Kraftübertragungsteils selbst im selben Prozess kombiniert und hergestellt werden.

Ein so erzeugtes Befestigungsteil wird einerseits ertüchtigt, bei äußerer Krafteinleitung den Kraftfluss axial über den formschlüssigen Verbund auf hohem Lastniveau verformungsarm weiterzuleiten und andererseits bei sich einstellender Reaktionskraft aus dem Profilstab einer dadurch erzwungenen radialen Aufweitung formsteif zu widerstehen.

Ein entsprechend konstruktiv voroptimierter, insbesondere gewickelter Kunststoffrohling für ein Kraftübertragungsteil wird somit an seinen Gewindebereichen mechanisch durch konzentrisch angeordnete Teile aus anderen Ausgangsmaterialien verstärkt.

Das erfindungsgemäße Kraftübertragungsteil ist bei geringem Gewicht leicht handzuhaben. Außerdem kann eine umfassende Kompatibilität zu anderen Profilstäben und damit kombinierten Montagesystemen erreicht werden.

Besonders vorteilhaft ist es, wenn in den Faserverbundwerkstoff mindestens ein Gewinde eingeformt ist, welches zumindest teilweise von einer Hülse überdeckt ist, wobei die Hülse auf der dem Faserverbundwerkstoff abgewanden Seite ebenfalls eine gewindeartige Struktur bzw. ein Gewinde aufweist. Die Hülse ist dabei formschlüssig sowie vorzugsweise auch kraftschlüssig auf bzw. in dem Gewinde des Faserverbundwerkstoffs fixiert. Beispielsweise kann dabei ein zuvor umgeformtes, einer welligen Form eines Bolzengewindes angepasster, dünnwandiger Rohrkörper in eine Kunststoffmutter eingebaut werden, so dass über diese Kombination einer vorteilhafterweise nahtlosen inneren Hülse mit gewickelten Fasern in einer Harzmatrix eine wesentlich höhere Ringspannung zerstörungsfrei und verformungsarm aufgenommen werden kann. Die beiden Enden des Rohres können alternativ im Mutternkörper versenkt und somit auch an den Stirnflächen durch Kunststoff geschützt werden oder sie ragen mit den Stirnflächen bündig abschließend aus dem Kunststoff heraus.

Gemäß einer ersten bevorzugten Ausführungsvariante weist die Hülse ein Innengewinde auf, wobei sie von dem Kraftübertragungsteil umgeben ist. Insbesondere kann die Hülse in den Faserverbundwerkstoff eingebettet sein. Die homogene Hülse kann als Innenteil unabhängig vorher produziert oder aber während des Herstellprozesses des Kraftübertragungsteils direkt mit hergestellt werden, beispielsweise durch Einspritzen, Eingelegte oder eingespritzte homogene Innenteile können neben Vorteilen der Werkstoffelgenschaften und damit hohen Festigkeiten geringen Dehnungen usw. in engsten Toleranzen hergestellt werden, wodurch auch die Gewindetoleranzen optimiert und damit die Kraftein- und Fortleitung erheblich verbessert werden. Ein derartiges Kraftübertragungsteil kann beispielsweise eine Mutter, ein Rohr oder eine Muffe sein.

Das Innengewinde kann dabei als Grobgewinde eine wellenartige Profilierung oder eine annähernd halbwellenartige Profilierung aufweisen. Vorzugsweise ist die zu einem Bolzengewinde weisende Oberflächenstruktur des Innengewindes der Hülse und die Oberfläche des Bolzengewindes im Wesentlichen glatt, so dass bei reibender Relativbewegung zwischen Schraubteil und Bolzen bzw. Anker die Oberfläche des Kunststoffgewindes am Bolzen nicht verletzt wird.

Besonders vorteilhaft ist es dabei weiterhin, wenn die Hülse auch ein Außengewinde aufweist, vermittels dessen sie in ein anders Faserverbundwerkstoffteil eingeschraubt ist. Ferner ist es auch möglich, die Hülse als separates Zwischenlegeteil erst bei bzw. kurz vor der Montage zwischen ein Kraftübertragungsteil und einen zugehörigen Bolzen einzuschrauben.

Eine vorteilhafte Alternative schlägt vor, dass die Hülse mehrere nach außen vorstehende Vorsprünge, insbesondere Rippen oder Grate, aufweist, die formschlüssig in dem Faserverbundwerkstoff gehalten sind. So kann eine besonders innige Befestigung erzielt werden.

Gemäß einer zweiten Ausführungsvariante weist die Hülse ein Außengewinde auf, wobei sie das Kraftübertragungsteil außen umgibt. Ein derartiges Kraftübertragungsteil kann beispielsweise als Rohr oder Stange ausgebildet sein.

Besonders vorteilhaft ist es ferner, wenn die Hülse an mindestens einer Stirnfläche des Kraftübertragungsteils einen radial vorstehenden Kragen aufweist. So kann das Kraftübertragungsteil auch an Stirnflächen verstärkt werden und besonders hohen Belastungen widerstehen und entsprechend große Kräfte beschädigungsfrei übertragen.

Vorteilhafterweise ist der Übergang zwischen der Hülse und dem Kragen dabei abgerundet oder abgeschrägt. Insbesondere kann eine innenliegende Hülse dabei einen trompetenartigen Auslauf aufweisen, der als Auflagerfläche gegen eine Ankerplatte wirken kann.

Besonders vorteilhaft ist es ferner, wenn an einer Stirnfläche des Kraftübertragungsteils zusätzliche Verstärkungselemente aus einem homogenen Material angeordnet sind. Diese zusätzlichen Verstärkungselemente müssen keine direkte Verbindung zu der erfindungsgemäß vorgesehenen Hülse aufweisen.

Gemäß einer beispielhaften Ausführungsform kann ein insbesondere im Spritzgussverfahren z. B. mit quer zur späteren Schraubachse umlaufenden ringartigen Rippen formoptimiertes Kunststoffteil aus hochfestem und definiert dehnfähigem Kunststoff mit engsten Toleranzen hergestellt werden, welches innen gewindeartig profiliert wird. So kann es als ein innen und außen hochformschlüssiges Hülsenteil in seiner Länge entsprechend der Mutternhöhe erzeugt und dann in einem mit langen Fasern zu wickelnden Mutternkörper aus mit Langfasem bewehrtem Kunststoff gebettet werden.

Besonders vorteilhaft ist es ferner, wenn der aus Faserverbundwerkstoff bestehende Körper in Umfangsrichtung verlaufende Fasern aufweist. Vorzugsweise können die Fasern dabei als Langfasem in Umfangsrichtung gewickelt und in eine Kunststoffmatrix eingebettet sein. Hierdurch wird eine besonders hohe tangentiale Festigkeit des Kraftübertragungsteils erreicht.

Eine weitere Festigkeitssteigerung kann dadurch erreicht werden, dass in den Körper aus Faserverbundwerkstoff zusätzlich eine Bewehrung eingebracht ist. Besonders vorteilhaft ist es ferner, wenn das Kraftübertragungsteil eine zumindest annähernd hohlzylindrische Grundform, beispielsweise als Mutter oder Muffe aufweist, wobei das Verhältnis von Länge zu Außendurchmesser größer als 1 und vorzugsweise größer als 1,5 ist. Bei einer im Verhältnis zum Durchmesser großen Länge können axial wirkende Kräfte besonders gut übertragen werden.

Gemäß einer weiteren bevorzugten Ausführungsform ist vorgesehen, dass das Kraftübertragungsteil als Dehnmutter ausgebildet ist, die an einem Ende einen radial nach außen vorspringenden Kopf aufweist.

Eine besonders vorteilhafte Verwendungsmöglichkeit eines erfindungsgemäßen Kraftübertragungsteils liegt darin, dass es zur Übertragung einer axialen Kraft als Mutter auf eine aus faserverstärktem Kunststoff bestehende Gewindestange aufgeschraubt wird, bei der es sich insbesondere um eine faserverstärkte Ankerstange zur Ankerung im Bergbau oder Tunnelbau handeln kann.

Weitere Vorteile und Merkmale der Erfindung ergeben sich aus der nachfolgenden Beschreibung und den in den Zeichnungen dargestellten Ausführungsbeispielen. Es zeigen:
- Fig. 1 bis 5:: Querschnitte durch fünf verschiedene Ausführungsformen erfindungsgemäßer Kraftübertragungsteile;
- Fig. 6:: Querschnitt durch ein Verstärkungselement für ein erfindungsgemäßes Kraftübertragungsteil;
- Fig. 7 und 8:: dreidimensionale Ansichten alternativer Ausführungsformen von Verstärkungselementen für ein erfindungsgemäßes Kraftübertragungsteil;
- Fig. 9:: Querschnitt durch ein erfindungsgemäßes Kraftübertragungsteil vor seinem Zusammenbau;
- Fig. 10:: Querschnitt durch ein montiertes Kraftübertragungsteil; und
- Fig. 11:: Querschnitt durch ein erfindungsgemäßes Kraftübertragungsteil vor seiner Montage.

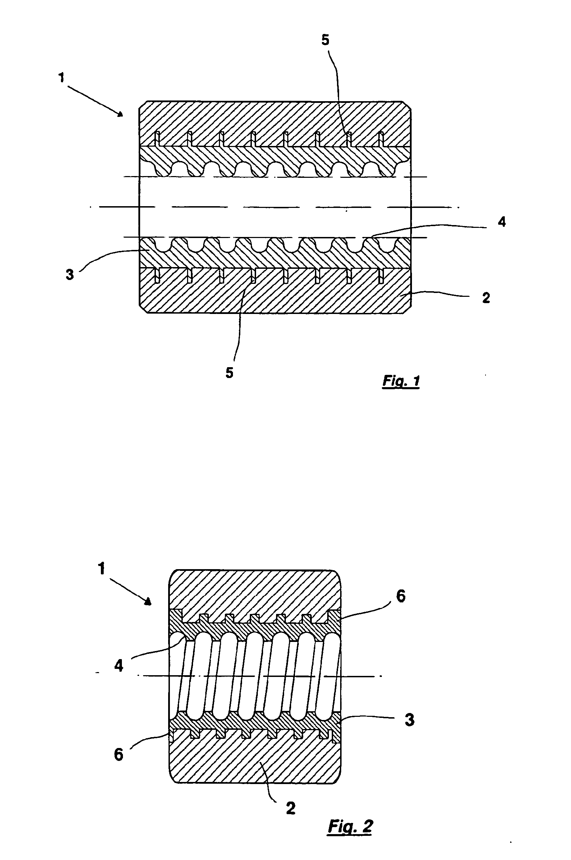

Bei der in Figur 1 gezeigten Ausführungsform ist ein Kraftübertagungsteil 1 als Mutter ausgeführt. Sie besteht aus einem äußeren Kraftübertragungskörper 2 aus faserverstärktem Kunststoff, der über seine gesamte axiale Länge ein hier hülsenförmig ausgebildetes Verstärkungselement 3 aus einem homogenen Kunststoff koaxial umschließt. Das der Kraftübertragung dienende Innengewinde 4 ist mit einer wellenförmigen Struktur in die Innenseite der Hülse 3 eingebracht. Die Hülse 3 weist an ihrer Außenseite eine Vielzahl von Vorsprüngen oder Rippen 5 auf die eine sichere formschlüssige Verbindung mit dem äußeren Kraftübertragungskörper 2 gewährleisten, in den die Hülse 3 als Inlay eingespritzt ist.

Bei der in Figur 2 gezeigten Variante ist das Gewinde 4 durch eine halbwellenförmige Struktur in der Hülse 3 ausgebildet, die an beiden Stirnseiten durch einen radial nach außen weisenden Kragen 6 endet, der außenseitig koplanar mit den Stirnseiten des Kraftübertagungsteils 1 abschließt.

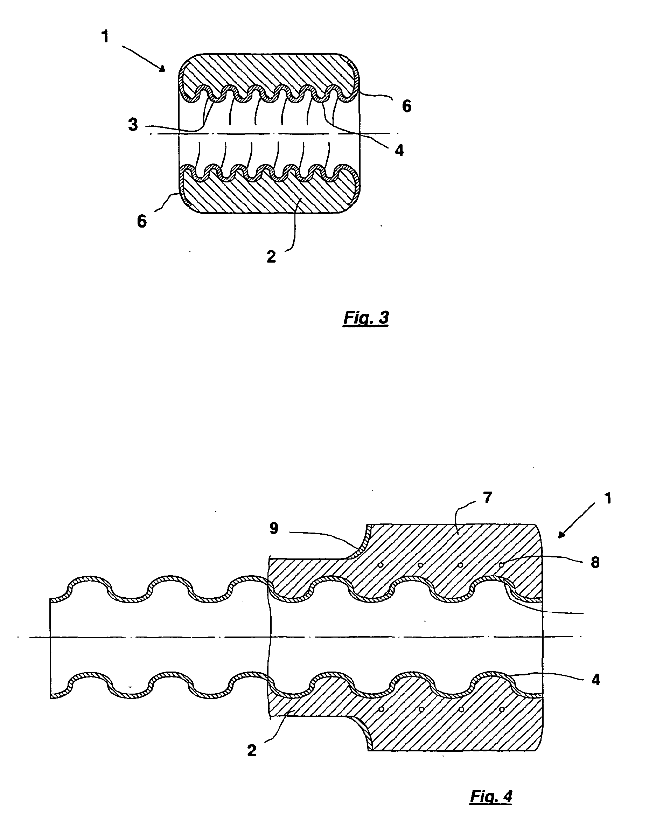

Bei der in Figur 3 dargestellten Variante ist der Übergang zwischen dem axialen Bereich der Hülse 3 und den beiden Kragen 6 jeweils trompetenförmig abgerundet, was ein besonders einfaches Auffädeln auf einen Gewindebolzen ermöglicht, da die endseitigen Stirnflächen der Hülse 3 immer im Maximum der Rippe des Innengewindes 4 auslaufen und wie ein Gewindeschneider den Gewindegrund eines Bolzengewindes erreichen um einen Selbstreinigungseffekt zu ermöglichen. Auf diese Weise erfolgt quasi ein "Freischneiden" von Mörtelresten, die beim Versetzen des Ankers am Ankergewinde haften.

In Figur 4 ist ein Kraftübertagungsteil 1 in der Form einer Zug- oder Dehnmutter gezeigt. Sie umfasst einen rohrförmigen Kraftübertragungskörper 2, der an einem Ende mit einem radial vorspringenden Kopf 7 versehen ist. Der Kraftübertragungskörper 2 umfasst gewickelte Fasern und in den Kopf 7 ist zusätzlich eine Bewehrung 8 eingebracht. Ferner ist an der dem rohrförmigen Bereich des Kraftübertragungskörpers 2 zugewandten Schulter des Kopfes 7 ein scheibenförmiges zusätzliches Verstärkungselement 9 in das Kraftübertagungstell 1 integriert.

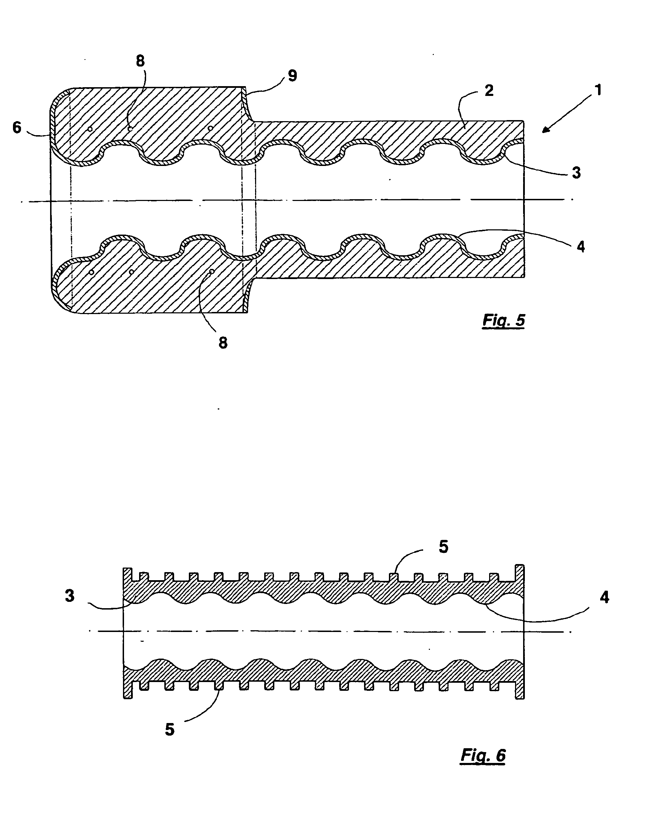

Bei der in Figur 5 dargestellten Variante ist wiederum ein den axialen Abschluss des Kopfes 7 bildendender Kragen 6 vorhanden, wobei der Übergang zwischen dem axialen Bereich der Hülse 3 und dem Kragen 6 auch hier abgerundet ist.

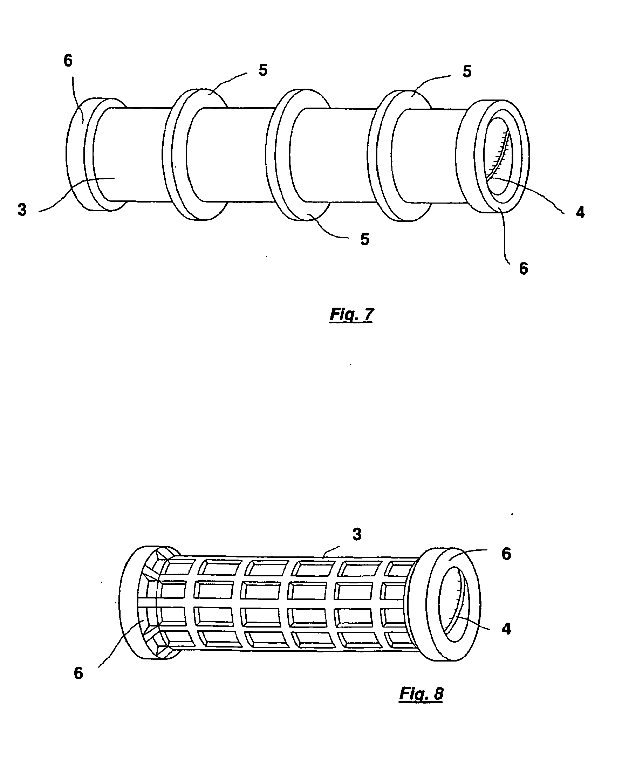

Die Figuren 6 bis 8 zeigen jeweils eine Hülse 3, die als vorproduziertes Verstärkungselement noch in ein jeweils nicht dargestelltes Kraftübertragungsteil einzubringen ist. Die aus einem homogenen bzw. isotropen Kunststoff gefertigten Hülsen 3 dienen insbesondere der Kompensation hoher Ringspannungen.

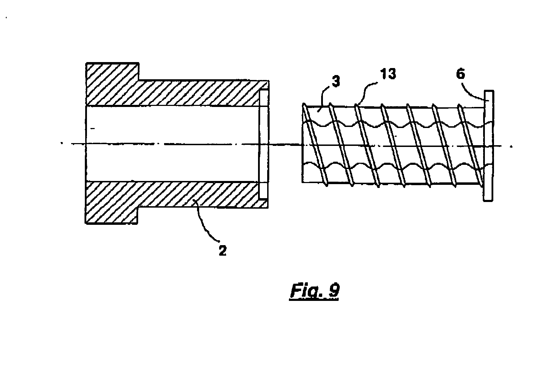

Figur 9 zeigt eine Hülse 3, die mittels eines außenseitig aufgebrachten Gewindes 13 in einen den Kraftübertragungskörper 2 bildenden Faserverbundrohling eingebracht werden kann. Innenseitig ist das der Kraftübertragung dienende Gewinde 4 in der Hülse 3 eingebracht.

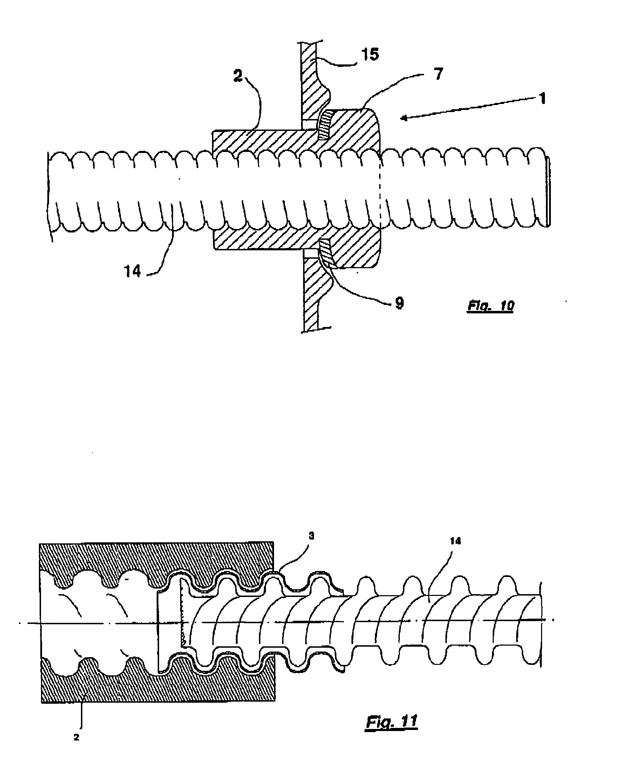

In Figur 10 ist ein als Dehnmutter ausgeführtes und fertig montiertes Kraftübertragungsteil 1 dargestellt, das auf eine Gewindestange 14 aufgeschraubt ist, um eine Ankerplatte 15 zu halten. Auch hier ist ein äußere Zugarmierung als zusätzliches Verstärkungselement 9 vorgesehen.

In Figur 11 ist die Montage eines Kraftübertragungsteils 1 gezeigt. Dabei wird eine Hülse 3 mit einem innenseitigen Gewinde 4 und einem außenseitigen Gewinde 16 in den faserverstärkten Kraftübertragungskörper 2 einer Mutter eingeschraubt und außerdem auf eine Gewindestange 14 aufgeschraubt. Diese Kombination von drei separaten Teilen 2, 3, 14 führt zu einer deutlich festeren und höher belastbaren Verbindung zwischen Mutter 2 und Gewindestange 14, als wenn die Hülse 3 nicht zwischengeschaltet würde.

## Patentansprüche

1. Kraftübertragungsteil (1), umfassend einen Körper (2) aus einem anisotropen Faserverbundwerkstoff sowie ein formschlüssig und/oder kraftschlüssig damit verbundenes Verstärkungselement (3) in welches mindestens ein Gewinde (4) eingebracht ist, durch das eine axiale Kraft übertragbar ist, wobei der Körper (2) aus Faserverbundwerkstoff zumindest teilweise das Verstärkungselement (3) umschließt und/oder zumindest teilweise von dem Verstärkungselement (3) umgeben ist,
**dadurch gekennzeichnet, dass** das Verstärkungselement (3) durch eine aus einem isotropen und/oder homogenen Kunststoff bestehende Hülse gebildet ist, die mit dem Körper (2) aus anisotropen Faserverbundwerkstoff verbunden ist.

2. Kraftübertragungsteil nach Anspruch 1, **dadurch gekennzeichnet, dass** mindestens ein Gewinde in den Faserverbundwerkstoff (2) eingeformt ist, welches zumindest teilweise von einer Hülse (3) überdeckt ist, wobei die Hülse (3) auf der dem Faserverbundwerkstoff (2) abgewanden Seite ebenfalls eine gewindeartige Struktur aufweist.

3. Kraftübertragungsteil nach Anspruch 1 oder 2, **dadurch gekennzeichnet, dass** die Hülse (3) ein Innengewinde (4) aufweist und von dem Körper (2) des Kraftübertragungsteils (1) umgeben ist.

4. Kraftübertragungsteil nach Anspruch 3, **dadurch gekennzeichnet, dass** die Hülse (3) ein Außengewinde (13) aufweist, vermittels dessen sie in den Faserverbundwerkstoff (2) einschraubbar ist.

5. Kraftübertragungsteil nach Anspruch 3, **dadurch gekennzeichnet, dass** die Hülse (3) mehrere nach außen vorstehende Vorsprünge, insbesondere Rippen (5) oder Grate (12), aufweist, die formschlüssig in dem Faserverbundwerkstoff (2) gehalten sind.

6. Kraftübertragungsteil nach Anspruch 1 oder 2, **dadurch gekennzeichnet, dass** die Hülse (3) ein Außengewinde aufweist und den Körper (2) des Kraftübertragungsteils (1) umgibt.

7. Kraftübertragungsteil nach einem der Ansprüche 1 bis 6, **dadurch gekennzeichnet, dass** die Hülse (3) an mindestens einer Stirnfläche des Kraftübertragungsteils (1) einen radial vorstehenden Kragen (6) aufweist.

8. Kraftübertragungsteil nach Anspruch 7, **dadurch gekennzeichnet, dass** der Übergang zwischen der Hülse (3) und dem Kragen (6) abgerundet oder abgeschrägt ist.

9. Kraftübertragungsteil nach einem der vorherigen Ansprüche, **dadurch gekennzeichnet, dass** an einer Stirnfläche des Kraftübertragungsteils (1) zusätzliche Verstärkungselemente (9) aus einem homogenen Material angeordnet sind.

10. Kraftübertragungsteil nach einem der vorherigen Ansprüche, **dadurch gekennzeichnet, dass** der Körper (2) in Umfangsrichtung verlaufende Fasern aufweist, die vorzugsweise als gewickelte Fasern in eine Kunststoffmatrix eingebettet sind.

11. Kraftübertragungsteil nach einem der vorherigen Ansprüche, **dadurch gekennzeichnet, dass** in den Körper (2) zusätzlich eine Bewehrung (8) eingebracht ist.

12. Kraftübertragungsteil nach einem der vorherigen Ansprüche, **dadurch gekennzeichnet, dass** es eine zumindest annähernd hohlzylindrische Grundform aufweist, wobei das Verhältnis von Länge zu Außendurchmesser größer als 1 und vorzugsweise größer als 1,5 ist.

13. Kraftübertragungsteil nach einem der vorherigen Ansprüche, **dadurch gekennzeichnet, dass** es als Dehnmutter ausgebildet ist, die an einem Ende mit einem radial nach außen vorspringenden Kopf (7) versehen ist.

14. Verwendung eines Kraftübertragungsteil nach einem der vorherigen Ansprüche zur Übertragung einer axialen Kraft, **dadurch gekennzeichnet, dass** es als Mutter auf eine aus faserverstärktem Kunststoff bestehende Gewindestange, insbesondere auf eine faserverstärkte Ankerstange zur Ankerung im Bergbau oder Tunnelbau, aufgeschraubt ist.

## Claims

1. Force transmission part (1), comprising a body (2) of an anisotropic fibre composite material and a reinforcing element (3) connected therewith in a positive-fitting or non-positive-fitting manner, into which at least one thread (4) is introduced, by which an axial force is able to be transmitted, wherein the body (2) of fibre composite material at least partially surrounds the reinforcing element (3) and/or is at least partially surrounded by the reinforcing element (3),
**characterized in that**
the reinforcing element (3) is formed by a sleeve consisting of an isotropic and/or homogeneous plastic, which is connected with the body (2) of anisotropic fibre composite material.

2. Force transmission part according to Claim 1, **characterized in that** at least one thread is formed into the fibre composite material (2), which is at least partially covered by a sleeve (3), wherein the sleeve (3) likewise has a thread-like structure on the side facing away from the fibre composite material (2).

3. Force transmission part according to Claim 1 or 2, **characterized in that** the sleeve (3) has an internal thread (4) and is surrounded by the body (2) of the force transmission part (1).

4. Force transmission part according to Claim 3, **characterized in that** the sleeve (3) has an external thread (13), by means of which it is able to be screwed into the fibre composite material (2).

5. Force transmission part according to Claim 3, **characterized in that** the sleeve (3) has several outwardly protruding projections, in particular ribs (5) or ridges (12) which are held in a positive-fitting manner in the fibre composite material (2).

6. Force transmission part according to Claim 1 or 2, **characterized in that** the sleeve (3) has an external thread and surrounds the body (2) of the force transmission part (1).

7. Force transmission part according to one of Claims 1 to 6, **characterized in that** the sleeve (3) has a radially protruding collar (6) on at least one end face of the force transmission part (1).

8. Force transmission part according to Claim 7, **characterized in that** the transition between the sleeve (3) and the collar (6) is rounded or chamfered.

9. Force transmission part according to one of the preceding claims, **characterized in that** additional reinforcing elements (9) of a homogeneous material are arranged on an end face of the force transmission part (1).

10. Force transmission part according to one of the preceding claims, **characterized in that** the body (2) has fibres running in the circumferential direction, which are preferably embedded as wound fibres into a plastic matrix.

11. Force transmission part according to one of the preceding claims, **characterized in that** an armouring (8) is additionally introduced into the body (2).

12. Force transmission part according to one of the preceding claims, **characterized in that** it has an at least approximately hollow cylindrical basic shape, wherein the ratio of length to external diameter is greater than 1 and preferably greater than 1.5.

13. Force transmission part according to one of the preceding claims, **characterized in that** it is constructed as an expanding nut, which is provided at one end with a radially outwardly protruding head (7).

14. Use of a force transmission part according to one of the preceding claims for the transmission of an axial force, **characterized in that** it is screwed as a nut onto a threaded rod, consisting of fibre-reinforced plastic, in particular onto a fibre-reinforced anchor rod for anchoring in mining or tunnelling.

## Revendications

1. Partie de transmission de force (1) comprenant un corps (2) à base d'un matériau renforcé de fibre et anisotrope et un élément de renfort (3) relié au corps par complémentarité de formes et/ou par adhérence, dans lequel au moins un filetage (4) est introduit, par lequel une force axiale peut être transmise, le corps (2) à base de matériau renforcé de fibre entourant au moins partiellement l'élément de renfort (3) et/ou étant entouré au moins partiellement par l'élément de renfort (3),
**caractérisée en ce que**
l'élément de renfort (3) est formé par un manchon à base d'un plastique isotrope et/ou homogène, lequel est relié au corps (2) à base de matériau renforcé de fibre et anisotrope.

2. Partie de transmission de force selon la revendication 1, **caractérisée en ce qu'**au moins un filetage est formé à l'intérieur du matériau renforcé de fibre (2), qui est recouvert au moins partiellement d'un manchon (3), le manchon (3) présentant également une structure de type filetage sur le côté opposé au matériau renforcé de fibre (2).

3. Partie de transmission de force selon la revendication 1 ou 2, **caractérisée en ce que** le manchon (3) présente un filetage intérieur (4) et est entouré par le corps (2) de la partie de transmission de force (1).

4. Partie de transmission de force selon la revendication 3, **caractérisée en ce que** le manchon (3) présente un filetage extérieur (13), au moyen duquel il peut être vissé dans le matériau renforcé de fibre (2).

5. Partie de transmission de force selon la revendication 3, **caractérisée en ce que** le manchon (3) présente plusieurs saillies, en particulier des nervures (5) ou des arêtes (12), dépassant vers l'extérieur, qui sont maintenues par complémentarité de formes dans le matériau renforcé de fibre (2).

6. Partie de transmission de force selon la revendication 1 ou 2, **caractérisée en ce que** le manchon (3) présente un filetage extérieur et entoure le corps (2) de la partie de transmission de force (1).

7. Partie de transmission de force selon l'une quelconque des revendications 1 à 6, **caractérisée en ce que** le manchon (3) présente une collerette (6) dépassant radialement sur au moins une surface frontale de la partie de transmission de force (1).

8. Partie de transmission de force selon la revendication 7, **caractérisée en ce que** la transition entre le manchon (3) et la collerette (6) est arrondie ou chanfreinée.

9. Partie de transmission de force selon l'une quelconque des revendications précédentes, **caractérisée en ce que** des éléments de renfort (9) supplémentaires à base d'un matériau homogène sont disposés sur une surface frontale de la partie de transmission de force (1).

10. Partie de transmission de force selon l'une quelconque des revendications précédentes, **caractérisée en ce que** le corps (2) présente des fibres agencées dans le sens périphérique, qui sont enfoncées de préférence sous forme de fibres enroulées dans une matrice plastique.

11. Partie de transmission de force selon l'une quelconque des revendications précédentes, **caractérisée en ce qu'**une armature (8) est introduite en supplément dans le corps (2).

12. Partie de transmission de force selon l'une quelconque des revendications précédentes, **caractérisée en ce qu'**elle présente une forme au moins approximative de cylindre creux, le rapport entre la longueur et le diamètre extérieur étant supérieur à 1 et de préférence supérieur à 1,5.

13. Partie de transmission de force selon l'une quelconque des revendications précédentes, **caractérisée en ce qu'**elle est conçue sous forme d'écrou d'extension, lequel est doté sur une extrémité d'une tête (7) dépassant radialement vers l'extérieur.

14. Utilisation d'une partie de transmission de force selon l'une quelconque des revendications précédentes pour la transmission d'une force axiale, **caractérisée en ce qu'**elle est vissée en tant qu'écrou sur une tige filetée à base de matériau renforcé de fibre, en particulier sur une tige d'ancrage renforcée de fibre pour l'ancrage dans le secteur de l'exploitation des mines et de la construction de tunnels.
